# EUROPEAN PATENT SPECIFICATION

(11) **EP 2 750 069 B1**
(45) Date of publication and mention of the grant of the patent: **28.06.2017**
(21) Application number: 13192835.0
(22) Date of filing: 14.11.2013
(51) Int. Cl.: G06F 21/56, G06F 21/53

(54) **Method and system for detecting malware using isolated environment**
Verfahren und System zur Erkennung von Malware mittels isolierter Umgebung
Procédé et système de détection de maliciels utilisant un environnement isolé

(30) Priority: 25.12.2012 RU 2012156433; 27.09.2013 US 201314039476
(43) Date of publication of application: 02.07.2014
(73) Proprietor: Kaspersky Lab, ZAO, Moscow 125212 (RU)
(72) Inventor: Yablokov, Victor V., 125212 Moscow (RU); Eliseev, Evgeny Y., 125212 Moscow (RU)
(74) Representative: Sloboshanin, Sergej

(56) References cited:
- US-A1- 2002 065 776
- US-B1- 6 658 571
- US-B1- 6 775 780
- US-B1- 6 823 460
- THOMAS BLAÌ SING ET AL: "An Android Application Sandbox system for suspicious software detection", MALICIOUS AND UNWANTED SOFTWARE (MALWARE), 2010 5TH INTERNATIONAL CONFERENCE ON, IEEE, PISCATAWAY, NJ, USA, 19 October 2010 (2010-10-19), pages 55-62, XP031833825, ISBN: 978-1-4244-9353-1
- FRASER T ET AL: "HARDENING COTS SOFTWARE WITH GENERIC SOFTWARE WRAPPERS", PROCEEDINGS OF THE 1999 IEEE SYMPOSIUM ON SECURITY AND PRIVACY. OAKLAND, CA, MAY 9 - 12, 1999; [PROCEEDINGS OF THE IEEE SYMPOSIUM ON SECURITY AND PRIVACY], LOS ALAMITOS, CA : IEEE COMP. SOC, US, 9 May 1999 (1999-05-09), pages 2-16, XP000871969, ISBN: 978-0-7695-0177-2
- Benjamin Davis ET AL: "I-ARM-Droid: A Rewriting Framework for In-App Reference Monitors for Android Applications", , 23 April 2012 (2012-04-23), XP055244132, Retrieved from the Internet: URL:http://web.cs.ucdavis.edu/~hchen/paper /most2012iarmdroid.pdf [retrieved on 2016-01-22]
- Nikhilesh Reddy ET AL: "Application-centric security policies on unmodified Android", , 5 July 2011 (2011-07-05), XP055246641, Retrieved from the Internet: URL:http://fmdb.cs.ucla.edu/Treports/11001 7.pdf [retrieved on 2011-07-05]

## Description

### Technical field

The disclosure relates generally to the field of information security, and more specifically to methods and systems for detecting malware using isolated environment.

### Background

The number of mobile communication devices is constantly growing, and they have penetrated into all areas of human life. The most popular of these are telephones, smartphones, notebooks, tablets and navigation systems. Mobile devices are primarily used for communication and entertainment. In parallel with the development of these devices, new wireless communication systems, networks and protocols are also being developed. The transmission of data from one device to another and the exchange of information are tasks that even inexperienced users can perform without difficulty. But the development of new technologies brings not only benefits, but also creates problems.

On one hand, the development of mobile devices and wireless communication systems simplifies human interaction, facilitates exchange of information, and erases geographical boundaries. On the other hand, new technologies create new security problems. The ease of copying and exchanging of information causes leaks, whether deliberate or accidental, of confidential personal or business information from organization networks. Therefore, information security specialists responsible for administration of information security infrastructure need to extra vigilant in protecting corporate IT systems in order prevent information leaks and various security breaches.

In addition, the growth in popularity of mobile platforms, such as Android and iOS, is attracting the attention of hackers who have various goals - from a desire to play jokes or show off, to the theft of confidential information for the purpose of extortion and blackmail. As a result of this, computer threats, such as viruses, worms and other types of malware, which were previously characteristic of desktop computers are beginning to appear on mobile platforms as well. New threats unique to mobile devices are also appearing, such as Trojan horses, which after being installed on a mobile device, send SMS messages to telephone numbers or use geolocation services to track the movements of the device user.

Therefore, there is a need for a security system to protect mobile devices from malware, information leaks, unauthorized access and other security threats.

From US 2002/0065776 A1 a system and method for securing an application for execution in a computer is known wherein, before execution, the application package is modified using a preprocessing module, which, among other things, modifies the binaries of applications in the application package such that an interception module is loaded when the binary is executed. According to this document, the interception module intercepts system calls that are made by the application program, wherein the system calls may remain in the binary.

From XP055244132, Benjamin Davis et al.: "I-ARM-Droid: A Rewriting Framework for In-App Reference Monitors for Android Applications," April 23, 2012, a rewriting framework for embedding In-App Reference Monitors (I-ARM) into Android applications is known in order to protect users from untrusted and potentially malicious applications. The framework user identifies a set of security-sensitive API methods and specifies the security policies, which may be tailored to each application. Then the framework automatically rewrites the Dalvik bytecode of the application, where it interposes on all the invocations of these API methods to implement the desired security policies.

Further, XP055246641, Nikhilesh Reddy et al: "Application-centric security policies on unmodified Android", July 5, 2011, deals with permission models for developers and users in conjunction with Google's android platform. In this context an application-centric permission approach is discussed instead of a resource-centric permission model, which can be shared across a variety of apps to enforce stronger security policies.

### Summary

Disclosed are a method, a system and a computer program product for detecting malicious applications as set forth in the independent claims 1, 6 and 9. In one aspect of the invention, a protection system includes an isolated environment, such as a container, into which one or more applications that seek access to protected system resources on a user device may be placed. The system also provides a library of handler functions. The handler functions control access of one or more applications to the protected resources. The system also modifies the one or more applications to access the library of handler functions instead of corresponding application program interface (API) functions of the user device. The handler functions receive API function calls from a modified application. The system analyzes the received API function calls for malicious behavior characteristics. When the API function calls do not exhibit malicious behavior characteristics, the handler functions perform the API function calls to the protected resources. When the API function calls exhibit malicious behavior characteristics, the system prevents access of the modified application to the protected resources.

One or more actions preventing access of the application to the protected resources may include blocking API function calls from the application, terminating execution of the application or sending a warning notification to a user.

Modifying an application may include replacing one or more classes or methods of the application that perform API function calls to the protected resources with one or more function calls to corresponding handler functions contained in the library. In another aspect, replacing one or more classes or methods of the application includes replacing one or more classes or methods contained in an application file having *.dex extension.

The system may further place a plurality of applications into the container and associating the same security policy with all applications in the container.

The protected system resources may include one or more of network resources, file system, operating system, and other applications or programs.

The above simplified summary of example aspects serves to provide a basic understanding of the invention. This summary is not an extensive overview of all contemplated aspects, and is intended to neither identify key or critical elements of all aspects nor delineate the scope of any or all aspects of the invention. Its sole purpose is to present one or more aspects in a simplified form as a prelude to the more detailed description of the invention that follows. To the accomplishment of the foregoing, the one or more aspects of the invention include the features described and particularly pointed out in the claims.

### Brief Description of the Drawings

The accompanying drawings, which are incorporated into and constitute a part of this specification, illustrate one or more example aspects of the invention and, together with the detailed description, serve to explain their principles and implementations.
**Fig. 1A** is a flow diagram illustrating a typical interaction of an application with the operating system and the hardware of a mobile device.
**Fig. 1B** is a flow diagram illustrating an interaction of an application with an operating system and hardware of a mobile device in accordance with aspects of the present invention.
**Fig. 2** is a block diagram illustrating the structure of a typical mobile operating system.
**Fig. 3** is a block diagram illustrating a modified structure of the mobile operating system in accordance with aspects of the present invention.
**Fig. 4** is a block diagram illustrating an architecture of the mobile operating system Android OS in accordance with aspects of the present invention.
**Fig. 5** is a block diagram illustrating an example configuration of the system for detecting malware in accordance with aspects of the present invention.
**Fig. 6** is a flow diagram illustrating an example method for detecting malware using isolated environment in accordance with aspects of the present invention.
**Fig. 7** is a block diagram illustrating an example general-purpose computer system in accordance with aspects of the present invention.

### Detailed Description

Example aspects of the present invention are described herein in the context of system, method and computer program product for protecting computer resources from leaks and unauthorized access. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

In order to provide security for a user device, such as mobile device, it is desirable to oversee all of the data being transmitted from the device, keep track of data arriving at the device, and keep track of events on devices and the data with which these devices are working. A mobile device is generally under the control of a mobile operating system (OS). The most popular mobile OS are Google Android, Apple iOS, Symbian, BlackBerry OS and Windows Phone. The applications which can be installed on the devices have access to the resources of the mobile device and to the communication ports via interfaces that are provided by the OS. The resources of a mobile device include those means of data processing system of the device that can be assigned to data processing for a particular unit of time. The primary resources of the data processing system are the processors, RAM, sets of data and networking and peripheral devices. The interface provided by the OS to interact with the resources of the device may be realized as application programming interface (API) functions. In this way, the application can perform operations with files, interact with memory, network, peripherals, etc. One of the ways of monitoring and controlling access of applications to the critical (i.e., protected) resources of a mobile device is to modify the code of the application that calls critical API functions. Hereinafter, the term critical refers to functions and resources that should be protected from unauthorized access (e.g., certain system files and network ports).

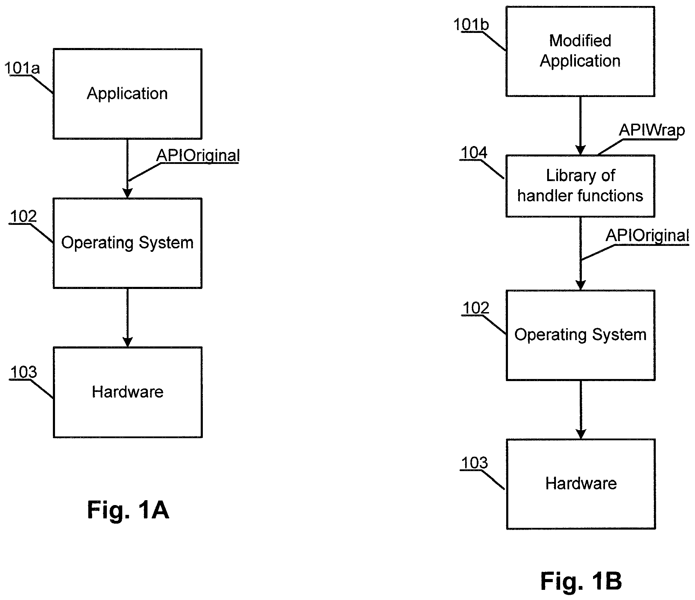

**Fig. 1A** shows interaction of an application with an OS and hardware of a user device, such as a mobile phone, tablet computer, laptop, desktop or the like. The user application 101a accesses, via API functions, the OS 102, which in turn provides the direct access to the hardware 103. **Fig. 1B** shows a diagram of interaction modified in accordance with one aspect of the present invention, in which calls to the original API functions by the application 101a may be replaced by the calls to the modified API functions. In one example aspect, the modified API functions may be provided by a library of handler functions 104, while the handler functions may call the original API functions provided by the OS 102. In one example aspect, a hander function may be a function that includes a functionality of another function.

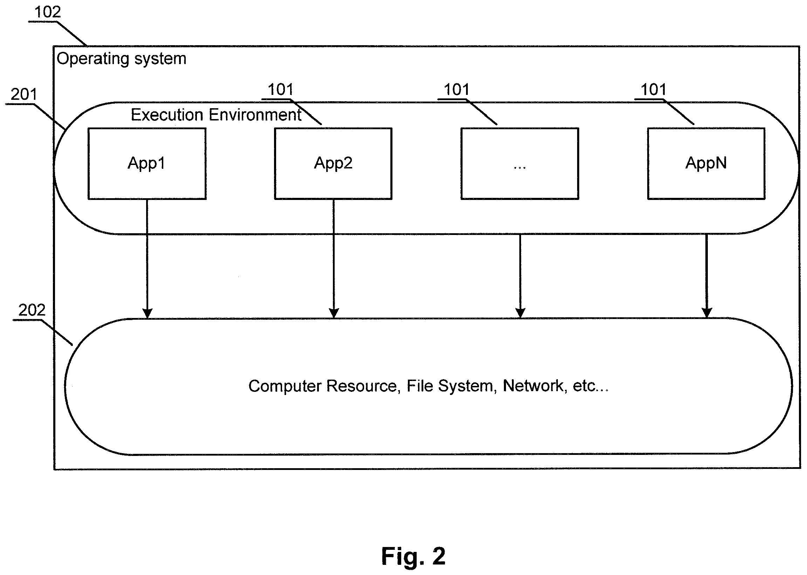

**Fig. 2** shows a simplified diagram of a typical structure of a mobile OS. Generally, the operating system (OS) 102 provides an interface for interacting with the physical components of the mobile device. In one aspect, the OS 102 includes user applications 101 operating in an execution environment 201, which is a component of the OS 102 operable to support the execution of applications. The environment 201 may be a Java virtual machine through which applications 101 interact with the resources 202 of the operating system 102.

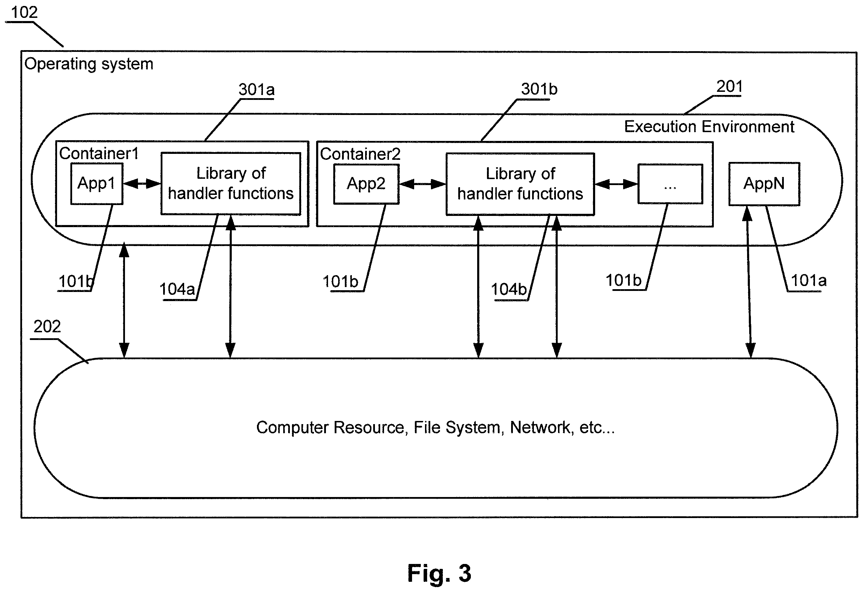

**Fig. 3** shows a modified version of the structure of the mobile OS of Fig. 2 in accordance with aspects of the present invention. To gain control over an application being executed on the OS 102, the OS 102 may be modified to include a system for protecting computer resources 202 from unauthorized access by the application 101. The system may be implemented as a secure environment 301, such as a container 301, for isolating applications 101b from the execution environment 201. The container 301 may include a library of handler functions 104 which are used to control access of applications 101 to critical system resources. In one aspect, the applications 101b may be placed in the container 301 and modified, e.g., stripped of the ability to directly call APIs of OS 102. The environment 201 now interacts with the container 301, which is a secure environment for the application 101b. In order to access protected system resources 202, the modified application 101b accesses the library of handler functions 104, which in turn checks associated security policies to determine whether application 101b is allowed to access the requested system resources 202. If security policy indicates that access to the requested system resource is allowed, the handler function from the library of handler functions 104 will call the requested API of the OS 102. In this manner, It is possible to monitor both incoming and outgoing network traffic, access to the file system, and the interaction of the application 101b with other applications 101a and 101b placed in the container or not.

A group of two or more applications 101b may be placed in the same container 301b. Such applications may include applications with similar functionality, which may be covered by the same security policy associated with the container 301b.

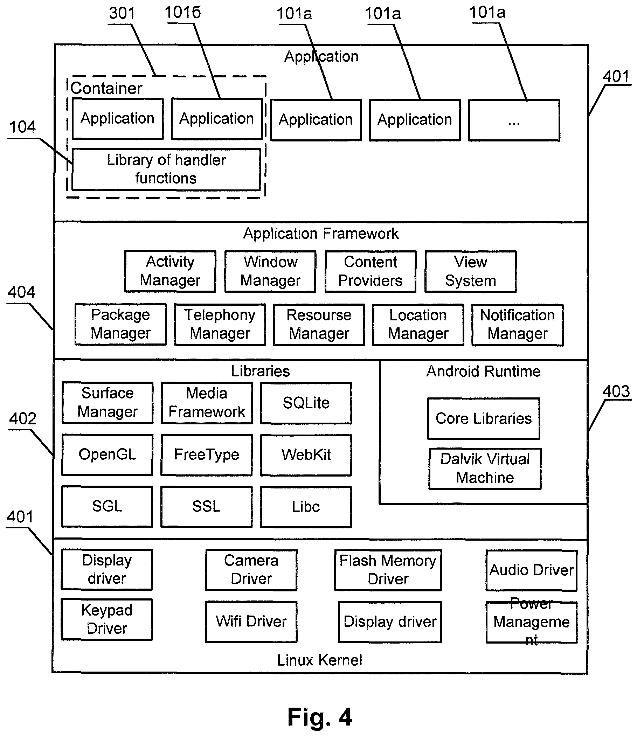

**Fig. 4** illustrates an example implementation of the system of the present invention in a popular mobile operating platform Android OS. The Android architecture is based on a Linux kernel 401. The kernel 401 is responsible for such system services as security, memory and process management; it includes a network stack and a model of drivers. The next level in the hierarchical structure is libraries 402 written in C/C++ and used by different components of the OS. An important part of the architecture is Android Runtime (the application execution environment) 403. The execution environment consists of a Java virtual machine Dalvik and a set of basic libraries. Dalvik executes files in a special format, .dex, optimized for devices with a small amount of memory. The basic libraries are written in Java language and include a large set of classes which support a broad range of functional capabilities. The next level is the Application Framework 404. This level is a toolkit that is used by all applications. At the top of the hierarchy are the Applications (the application level) 401. Android does not distinguish between basic telephone applications and third-party software. Thus, the key components such as dialling number, desktop, Gmail client, and so forth can be replaced by alternative analogs or modified, which lets one use the present invention on this platform. But the platform has a peculiarity in that applications are executed in a sandbox (a rigorously monitored set of resources for executing a guest program) and do not have the right to modify components situated on the same level or lower levels. To monitor applications in the Android OS, the application is placed in a container 301, where the dex file of the application 101a is modified by replacing the
java.io.*
java.lang.Runtime.loadLibrary()
java.lang.Runtime.exec()
android.app.ActivityManager.getRunningServices()
javax.crypto.Cipher
java.lang.System.loadLibrary()
java.lang.ClassLoader.getResourceAsStream()
android.webkit.WebView
android.telephony.SmsMessage
android.content.BroadcastReceiver.abortBroadcast()
android.app.Activity.startActivity()
android.content.Context.getClassLoader()
android.content.Context.startActivity()
android.content.Context.getSystemService()
java.net.*
java.lang.Class.getClassLoader()
java.lang.Class.getClasses()
java.lang.Class.getResourceAsStream()
android.telephony.SmsManager.*

The modification provides control over the critical activity of an application. The modification is being done at the stage of loading the application. If a critical action is attempted, the application 101b will not be able to perform it, since the original class has been replaced by the class described in the library 104. Therefore, the corresponding method will first be called from the library 104 and a check will be done for compliance of the action being performed with the security policy. If the critical action does not violate the security policy, the original OS method will be called.

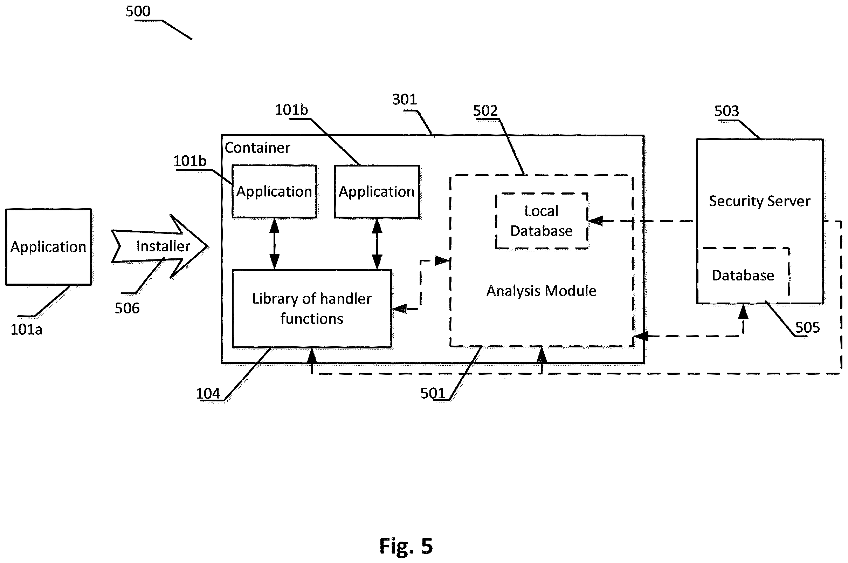

**Fig. 5** shows an example configuration of the system for detection of malicious software in the code of applications in accordance with aspects of the present invention. The system 500 includes a container 301 of applications 101b. The applications 101a may be placed in the container by the user or automatically during the loading stage, by a previously provided toolkit. For example, such a toolkit may be provided by an antivirus application, which will place untrusted and suspicious applications in the container 301. In another example, such a toolkit may also be an installer 506, which places in the container 301 all applications 101a being downloaded from the network. The system 500 may modify the critical function calls of applications 101b that could be used malicious purposes (e.g., sending of SMS, access to being downloaded from the network. The system 500 may modify the critical function calls of applications 101b that could be used malicious purposes (e.g., sending of SMS, access to the network, working with the file system, etc.). The critical functions may be replaced by handler functions, which are specified in the library of handler functions 104. The system may also includes an analysis module 501, designed to detect malicious software, and a local security rules database 502, containing information (e.g. templates) on the characteristic behaviour of malware and rules for blocking them. The database 502 may contain, for example, a template of certain sequence of calls of critical functions with prohibited parameters (e.g., sending of SMS to short numbers, downloading a file from an untrusted network resource, etc.).

The system 500 monitors the execution of the applications 101b placed in the container 301 and keeps track of the activity of the applications 101b. An application 101b cannot directly call critical functions, the calls to the critical functions are performed by handler functions. The library 104 transmits to the analysis module 501 information about the functions being called (e.g., the names of functions and the parameters of the calls), and the analysis module 501 may compare the information obtained from the library 104 with malware templates from the local database 502. If on the basis of the analysis by the analysis module 501, behaviour characteristic of malicious software is detected, the system 500 may take appropriate actions in accordance with the security policies specified in the database 502. For example, the library of handler functions 104 may block calls to the critical functions (i.e., the library does not call the original API function in the OS 102), the application 101b will be halted or closed, the user may receive a warning message, etc. In one aspect, the analysis module 501, library 104 and local database 502 may updated from the security server 503, which enables a timely response to new threats (e.g., expanding the list of critical functions, adding new malware templates and security rules to the local database 502).

In one example aspect, the analysis module 501 may not use the local database 502, but instead may access a remote database 505 on the security server 503. In another aspect, the analysis module 501 itself can reside remotely on the security server 503. In this case, the library 104 on the local device will gather information about the operation of the application being analyzed and forward this information to the remote security server 503, where the information received will be analyzed by the remote analysis module 501. In another aspect, the security module 501 and local database 502 can be integrated with the library 104.

The described system for the detection of malicious software may be used, for example, to intercept attempts by malicious applications to send text messages. In this case, the following methods (i.e., functions) may be critical to the operation of the application:
android.telephony.gsm.SmsManager.sendTextMessage()
android.telephony.gsm.SmsManager.sendMultipartTextMessage()
android.telephony.gsm.SmsManager.sendDataMessage()
android.telephony.SmsManager.sendTextMessage()
android.telephony.SmsManager.sendMultipartTextMessage()
android.telephony.SmsManager.sendDataMessage()
java.lang.reflect.Method.invoke()

To control access of the application 101 to these methods, the application calls to the above-listed methods may be modified. After placing the application 101 in the container 103, the critical methods may be replaced in the application. For example, the method:
android.telephony.SmsManager.getDefault().sendTextMessage("<phone_number>", null, "<message_text>", null, null);
may be replaced with the call to the following method:
   com.kaspersky.container.hooks.android_telephony_SmsManager.sendTextMessage (android.telephony.SmsManager.getDefault(), "<phone_number>", null, "<message_text>", null, null);

The description of these methods is found in the library 104, which extracts the parameters of the method called up and transmits them for analysis; an example of the library code for a number of critical methods may look like this:

```
      package com.kaspersky.container.hooks;
      public class android_telephony_SmsManager {
            public static void sendTextMessage(Object impl, java.lang.String arg1,
            java.lang.String arg2, java.lang.String arg3, android.app.PendingIntent arg4,
            android.app.Pendinglntent arg5) {
                  if
                  (!SecurityManager.get("sms").allow(String.valueOf(arg1),
String.valueOf(arg3))) {return;}
                  ((android.telephony.SmsManager)impl).sendTextMessage(arg1, arg2,
                  arg3, arg4, arg5);
            }
            public static void sendMultipartTextMessage(Object impl, java.lang.String
            arg1, java.lang.String arg2, java.util.ArrayList arg3,
java.util.ArrayList arg4, java.util.ArrayList
            arg5) {
                   if
                   (!SecurityManager.get("sms").allow(String.valueOf(arg1),
String.valueOf(arg3))) { return; }
     ((android.telephony.SmsManager)impl).sendMultipartTextMessage(arg1, arg2, arg3,
     arg4, arg5);
            }
            public static void sendDataMessage(Object impl, java.lang.String arg1,
            java.lang.String arg2, short arg3, byte[] arg4, android.app.PendingIntent arg5,
            android.app.Pendinglntent arg6) {
                   if
                   (!SecurityManager.get("sms").allow(String.valueOf(arg1),
String.valueOf(arg4))) { return; }
                   ((android.telephony.SmsManager)impl).sendDataMessage(arg1, arg2,
                   arg3, arg4, arg5, arg6);
            }
      }
```

This example code function contains description of three handler functions used to replace the original critical methods. Each of the functions checks to make sure the parameters used are permitted. If the requirements of the security policy are fulfilled, the original methods are called up. If the arguments do not withstand the check, the transmission of the text message will be halted in the given example. It is also possible not only to halt the message, but also to send an empty message, warn the user, close the application, and so on.

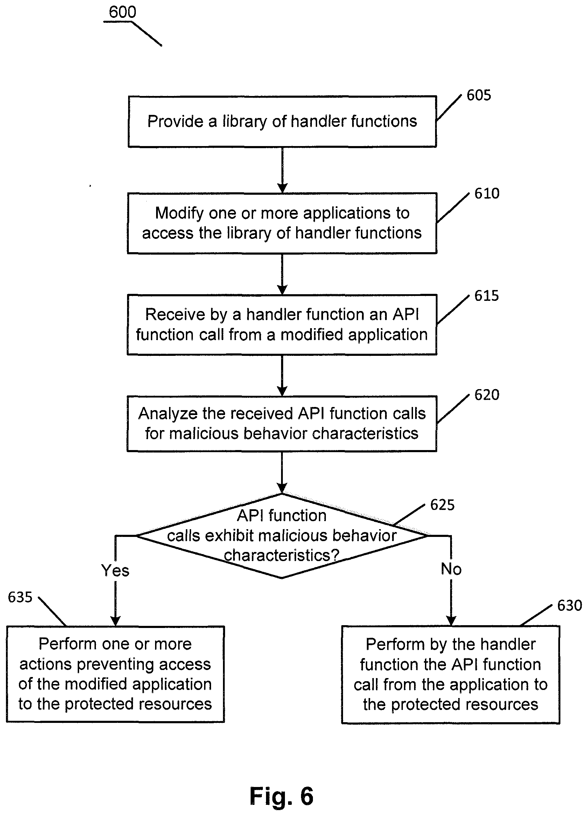

**Fig. 6** shows an example method for detecting malware in accordance with aspects of the present invention. At step 605, the method 600 includes providing a library of handler functions. The handler functions control access of one or more applications to protected resources on a user device, such as a mobile device. In one example aspect, a network security serve, such as server 503 can provide the library of handler functions. In another example aspect, an antivirus application deployed on the user device can provide the library of handler functions. At step 610, the method 600 includes modifying one or more applications on the user device to access the library of handler functions instead of corresponding application program interface (API) functions of the user device. In one example aspect, the applications may be modified at the security server 503 or by the toolkit provided by the antivirus application on the user device. At step 615, the method 600 includes receiving by a handler function an API function call from a modified application. At step 620, the method 600 includes analyzing the received API function calls for malicious behaviour characteristics. In one example aspect, the analysis module 501 may perform malware analysis of the API function calls. At step 625, when the API function calls do not exhibit malicious behaviour characteristics, the method 600 proceeds to step 630 at which the handler functions perform the API function call from the application to the protected system resources. When the API function calls exhibit malicious behaviour characteristics, the method 600 proceeds to step 635 at which the handler functions perform one or more actions preventing access of the modified application to the protected resources, e.g., blocking the API function calls.

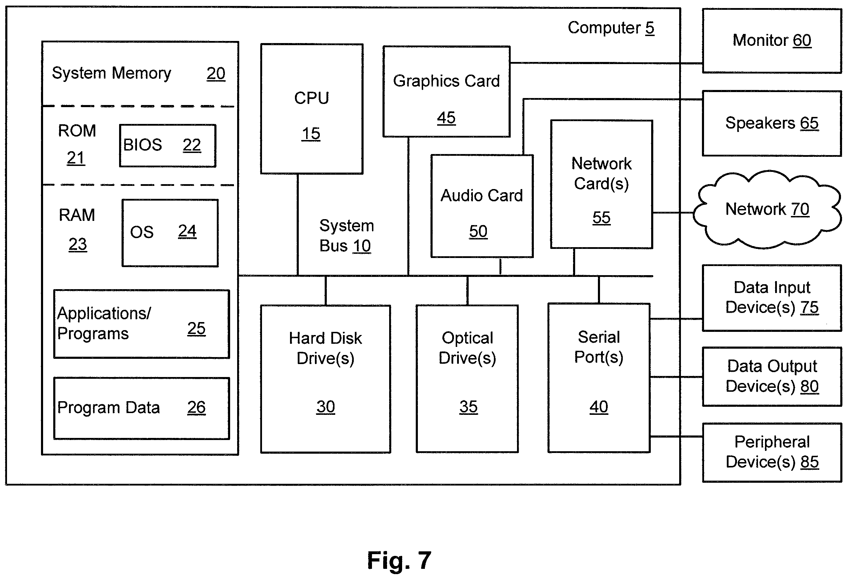

**Fig. 7** depicts an example configuration of a general-purpose computer 5 that can be used to implement the disclosed system and methods for protecting computer resources from unauthorized access according to various aspects of the present invention. The computer system 5 may include, but not limited to, a personal computer, a notebook, tablet computer, a smart phone, a network server, a router, or other type of computing device. As shown, computer system 5 may include one or more hardware processors 15, system memory 20, one or more hard disk drive(s) 30, optical drive(s) 35, serial port(s) 40, graphics card 45, audio card 50 and network card(s) 55 connected by system bus 10. System bus 10 may be any of several types of bus structures including a memory bus or memory controller, a peripheral bus and a local bus using any of a variety of known bus architectures. Processor 15 may include one or more Intel^{®} Core 2 Quad 2.33 GHz processors or other type of microprocessor.

System memory 20 may include a read-only memory (ROM) 21 and random access memory (RAM) 23. Memory 20 may be implemented as in DRAM (dynamic RAM), EPROM, EEPROM, Flash or other type of memory architecture. ROM 21 stores a basic input/output system 22 (BIOS), containing the basic routines that help to transfer information between the components of computer system 5, such as during start-up. RAM 23 stores operating system 24 (OS), such as Windows^{®} XP Professional or other type of operating system, that is responsible for management and coordination of processes and allocation and sharing of hardware resources in computer system 5. Memory 20 also stores applications and programs 25. Memory 20 also stores various runtime data 26 used by programs 25.

Computer system 5 may further include hard disk drive(s) 30, such as SATA HDD, and optical disk drive(s) 35 for reading from or writing to a removable optical disk, such as a CD-ROM, DVD-ROM or other optical media. Drives 30 and 35 and their associated computer-readable media provide non-volatile storage of computer readable instructions, data structures, applications and program modules/subroutines that implement algorithms and methods disclosed herein. Although the exemplary computer system 5 employs magnetic and optical disks, it should be appreciated by those skilled in the art that other types of computer readable media that can store data accessible by a computer system 5, such as magnetic cassettes, flash memory cards, digital video disks, RAMs, ROMs, EPROMs and other types of memory may also be used in alternative aspects of the computer system 5.

Computer system 5 further includes a plurality of serial ports 40, such as Universal Serial Bus (USB), for connecting data input device(s) 75, such as keyboard, mouse, touch pad and other. Serial ports 40 may be also be used to connect data output device(s) 80, such as printer, scanner and other, as well as other peripheral device(s) 85, such as external data storage devices and the like. System 5 may also include graphics card 45, such as nVidia^{®} GeForce^{®} GT 240M or other video card, for interfacing with a monitor 60 or other video reproduction device. System 5 may also include an audio card 50 for reproducing sound via internal or external speakers 65. In addition, system 5 may include network card(s) 55, such as Ethernet, WiFi, GSM, Bluetooth or other wired, wireless, or cellular network interface for connecting computer system 5 to network 70, such as the Internet.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods are described in the present disclosure in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module can also be implemented as a combination of the two, with certain functions facilitated by hardware alone, and other functions facilitated by a combination of hardware and software. In certain implementations, at least a portion, and in some cases, all, of a module can be executed on the processor of a general purpose computer (such as the one described in greater detail in Fig. 7 above). Accordingly, each module can be realized in a variety of suitable configurations, and should not be limited to any particular implementation exemplified herein.

In the interest of clarity, not all of the routine features of the aspects are disclosed herein. It will be appreciated that in the development of any actual implementation of the invention, numerous implementation-specific decisions must be made in order to achieve the developer's specific goals, and that these specific goals will vary for different implementations and different developers. It will be appreciated that such a development effort might be complex and time-consuming, but would nevertheless be a routine undertaking of engineering for those of ordinary skill in the art having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various aspects disclosed herein encompass present and future known equivalents to the known components referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

## Claims

1. A method for detecting malicious applications, the method comprising:
providing a library of handler functions (104; 104a; 104b) associated with a container (301; 301a; 301b) on a memory accessible by a processor, wherein the handler functions control an access of one or more applications (101b) to protected resources (202) on a computer device;
placing a plurality of applications (101b) into the container (301; 301a; 301b),
wherein the container is configured to isolate the plurality of applications (101b) from an execution environment (201) of the computer device;
associating a same security policy with the plurality of applications (101b) in the container (301; 301a; 301b);
modifying, via the processor, a plurality of function calls of the one or more applications (101b) when loading the one or more applications (101b) to be controlled by the handler functions, to access the library of handler functions (104; 104a; 104b) instead of corresponding application program interface (API) functions of the computer device by replacing one or more classes or methods of the one or more applications (101b) that perform function calls to the protected resources (202) with one or more function calls to corresponding handler functions contained in the library (104, 104a, 104b);
receiving, by the handler functions, one of the plurality of function calls from a modified application (101b);
accessing a remote security server (503) that analyzes the received function call for malicious behavior characteristics by using a remote database (505) and that indicates to the computer device whether the received function call contains malicious behavior characteristics;
performing by the handler functions the received function call to the protected resources (202) if the received function call contains no malicious behavior characteristics; and
preventing the modified application (101b) to access the protected resources (202) if the received function call contains malicious behavior characteristics.

2. The method of claim 1, wherein preventing the modified application to access the protected resources (202) comprises blocking the received function call from the modified application, terminating an execution of the modified application or sending a warning notification to a user.

3. The method of claim 1, wherein replacing one or more classes or methods of the one or more applications (101b) comprises replacing the one or more classes or methods contained in an application file having *.dex extension, wherein the application (101b) is placed into the container (301; 301a; 301b) in which the file having the *.dex extension is modified.

4. The method of claim 1, wherein the protected resources (202) include one or more of network resources, file system, operating system, and applications or programs (101a) other than the one or more applications (101b).

5. The method of claim 1, further comprising:
subsequent to the modifying, detecting that a critical action is attempted by at least one of the one or more applications;
calling methods corresponding to the one or more classes specified in the library of handler functions;
checking a compliance of the critical action against a security policy; and
upon detecting no violation of the security policy, calling the one or more classes or methods of the one or more applications that perform API function calls to the protected resources (202).

6. A system for detecting malicious applications, the system comprising:
a memory comprising a container (301; 301a; 301b) associated with a library of handler functions (104; 104a; 104b), wherein the handler functions control an access of one or more applications (101b) to protected resources (202) on a computer device;
a processor coupled to the memory and being configured to:
place a plurality of applications (101b) into the container (301; 301a; 301b), wherein the container is configured to isolate the plurality of applications (101b) from an execution environment (201) of the computer device;
associate a same security policy with the plurality of applications (101b) in the container (301; 301a; 301b);
modify a plurality of function calls of the one or more applications (101b) when loading the one or more applications (101b) to be controlled by the handler functions, to access the library of handler functions (104; 104a; 104b) instead of corresponding application program interface (API) functions of the computer device by replacing one or more classes or methods of the one or more applications (101b) that perform function calls to the protected resources (202) with one or more function calls to corresponding handler functions contained in the library (104, 104a, 104b);
receive, by the handler functions, one of the plurality of the function calls from a modified application (101b);
access a remote security server (503) that analyzes the received function call for malicious behavior characteristics by using a remote database (505) and that indicates to the computer device whether the received function call contains malicious behavior characteristics;
perform by the handler functions the received function call to the protected resources (202) if the received function call contains no malicious behavior characteristics; and
prevent the modified application (101b) to access the protected resources (202) if the received function call contains malicious behavior characteristics.

7. The system of claim 6, wherein the processor is configured to prevent the modified application (101b) to access the protected resources (202) at least by blocking the received function call from the modified application (101b), terminating an execution of the modified application or sending a warning notification to a user.

8. The system of claim 6, wherein to replace one or more classes or methods of the one or more applications (101b) the processor is further configured to replace the one or more classes or methods contained in an application file having *.dex extension, wherein the application (101b) is placed into the container (301; 301a; 301b) in which the file having the *.dex extension is modified.

9. A computer readable storage medium storing a plurality of computer codes for implementing the method steps of at least one of claims 1-5.

## Patentansprüche

1. Verfahren zum Detektieren von schädlichen Anwendungen, wobei das Verfahren umfasst:
Bereitstellen einer Bibliothek von Handler-Funktionen (104; 104a; 104b), die einem Container (301; 301a; 301b) auf einem Speicher zugeordnet sind, auf den ein Prozessor zugreifen kann, wobei die Handler-Funktionen einen Zugriff einer oder mehrerer Anwendungen (101b) auf geschützte Ressourcen (202) auf einem Computergerät steuern;
Platzieren einer Vielzahl von Anwendungen (101b) in den Container (301; 301a; 301b), wobei der Container dazu konfiguriert ist, die Vielzahl von Anwendungen (101b) von einer Ausführungsumgebung (201) des Computergeräts zu isolieren;
Zuordnen einer gleichen Security-Policy zu der Vielzahl von Anwendungen (101b) in dem Container (301; 301a; 301b);
Modifzieren, durch den Prozessor, einer Vielzahl von Funktionsaufrufen der einen oder mehreren Anwendungen (101b) beim Laden der einen oder mehreren Anwendungen (101b), die durch die Handler-Funktionen zu steuern sind, um auf die Bibliothek von Handler-Funktionen (104; 104a; 104b) anstatt auf entsprechende Anwendungsprogrammschnittstellen(API)-Funktionen des Computergeräts zuzugreifen, indem eine oder mehrere Klassen oder Verfahren der einen oder mehreren Anwendungen (101b), die Funktionsaufrufe an die geschützten Ressourcen (202) durchführen, durch einen oder mehrere Funktionsaufrufe an entsprechende in der Bibliothek enthaltene Handler-Funktionen (104; 104a; 104b) ersetzt werden;
Empfangen, durch die Handler-Funktionen, einen der Vielzahl von Funktionsaufrufen von einer modifizierten Anwendung (101b);
Zugreifen auf einen entfernten Security-Server (503), der den empfangenen Funktionsaufruf durch Verwenden einer entfernten Datenbank (505) auf Eigenschaften schädlichen Verhaltens analysiert und der dem Computergerät anzeigt, ob der empfangene Funktionsaufruf Eigenschaften schädlichen Verhaltens enthält;
Durchführen, durch die Handler-Funktionen, des empfangenen Funktionsaufrufs an die geschützten Ressourcen (202), falls der empfangene Funktionsaufruf keine Eigenschaften schädlichen Verhaltens enthält; und
Verhindern, dass die modifizierte Anwendung (101b) auf die geschützten Ressourcen (202) zugreift, falls der empfangene Funktionsaufruf Eigenschaften schädlichen Verhaltens enthält.

2. Verfahren nach Anspruch 1, wobei das Verhindern, dass die modifizierte Anwendung auf die geschützten Ressourcen (202) zugreift, ein Blockieren des empfangenen Funktionsaufrufs von der modifizierten Anwendung, ein Beenden einer Ausführung der modifzierten Anwendung oder ein Senden einer Warnmitteilung an einen Benutzer umfasst.

3. Verfahren nach Anspruch 1, wobei das Ersetzen einer oder mehrerer Klassen oder Verfahren der einen oder mehreren Anwendungen (101b) ein Ersetzen der einen oder mehreren Klassen oder Verfahren umfasst, die in einer Anwendung enthalten sind, die eine *.dex-Erweiterung aufweist, wobei die Anwendung (101b) in den Container (301; 301a; 301b) platziert wird, in dem die Datei mit der *.dex-Erweiterung modifziert wird.

4. Verfahren nach Anspruch 1, wobei die geschützten Ressourcen (202) eines oder mehrere aus Netzwerkressourcen, einem Dateisystem, einem Betriebssystem, und Anwendungen oder Programme (101a) umfassen, die andere als die eine oder mehreren Anwendungen (101b) sind.

5. Verfahren nach Anspruch 1, ferner umfassend:
nachfolgend auf das Modifzieren, Detektieren, dass durch wenigstens eine der einen oder mehreren Anwendungen eine kritische Aktion versucht wird;
Aufrufen von Verfahren, die der einen oder den mehreren Klassen entsprechen, die in der Bibliothek von Handler-Funktionen spezifiziert sind;
Überprüfen der Einhaltung einer Security-Policy durch eine kritische Aktion; und
nach dem Detektieren von keiner Verletzung der Security-Policy, Aufrufen der einen oder mehreren Klassen oder Verfahren der einen oder mehreren Anwendungen, die API-Funktionsaufrufe an die geschützten Ressourcen (202) durchführen.

6. System zum Detektieren von schädlichen Anwendungen, wobei das System umfasst:
einen Speicher, der einen Container (301; 301a; 301b) umfasst, der einer Bibliothek von Handler-Funktionen (104; 104a; 104b) zugeordnet ist, wobei die Handler-Funktionen einen Zugriff einer oder mehrerer Anwendungen (101b) auf geschützte Ressourcen (202) auf einem Computergerät steuern;
einen Prozessor, der mit dem Speicher verbunden ist und dazu konfiguriert ist:
eine Vielzahl von Anwendungen (101b) in den Container (301; 301a; 301b) zu platzieren, wobei der Container dazu konfiguriert ist, die Vielzahl von Anwendungen (101b) von einer Ausführungsumgebung (201) des Computergeräts zu isolieren;
der Vielzahl von Anwendungen (101b) in dem Container (301; 301a; 301b) eine gleiche Security-Policy zuzuordnen;
eine Vielzahl von Funktionsaufrufen der einen oder mehreren Anwendungen (101b) beim Laden der einen oder mehreren Anwendungen (101b) zu modifzieren, die durch die Handler-Funktionen zu steuern sind, um auf die Bibliothek von Handler-Funktionen (104; 104a; 104b) anstatt auf entsprechende Anwendungsprogrammschnittstellen(API)-Funktionen des Computergeräts zuzugreifen, indem eine oder mehrere Klassen oder Verfahren der einen oder mehreren Anwendungen (101b), die Funktionsaufrufe an die geschützten Ressourcen (202) durchführen, durch einen oder mehrere Funktionsaufrufe an entsprechende in der Bibliothek enthaltene Handler-Funktionen (104; 104a; 104b) ersetzt werden;
durch die Handler-Funktionen, einen der Vielzahl von Funktionsaufrufen von einer modifizierten Anwendung (101b) zu erhalten;
auf einen entfernten Security-Server (503) zuzugreifen, der den empfangenen Funktionsaufruf durch Verwenden einer entfernten Datenbank (505) auf Eigenschaften schädlichen Verhaltens analysiert und der dem Computergerät anzeigt, ob der empfangene Funktionsaufruf Eigenschaften schädlichen Verhaltens enthält;
durch die Handler-Funktionen, den empfangenen Funktionsaufruf an die geschützten Ressourcen (202) durchzuführen, falls der empfangene Funktionsaufruf keine Eigenschaften schädlichen Verhaltens enthält; und
zu verhindern, dass die modifizierte Anwendung (101b) auf die geschützten Ressourcen (202) zugreift, falls der empfangene Funktionsaufruf Eigenschaften schädlichen Verhaltens enthält.

7. System nach Anspruch 6, wobei der Prozessor dazu konfiguriert ist, wenigstens durch Blockieren des empfangenen Funktionsaufrufs von der modifizierten Anwendung, durch Beenden einer Ausführung der modifzierten Anwendung oder durch Senden einer Warnmitteilung an einen Benutzer zu verhindern, dass die modifizierte Anwendung (101b) auf die geschützten Ressourcen (202) zugreift.

8. Verfahren nach Anspruch 6, wobei zum Ersetzen einer oder mehrerer Klassen oder Verfahren der einen oder mehreren Anwendungen (101b) der Prozessor ferner dazu konfiguriert ist, die eine oder mehreren Klassen oder Verfahren zu ersetzen, die in einer Anwendung enthalten sind, die eine *.dex-Erweiterung aufweist, wobei die Anwendung (101b) in den Container (301; 301a; 301b) platziert wird, in dem die Datei mit der *.dex-Erweiterung modifziert wird.

9. Compterlesbares Speichermedium, das eine Vielzahl von Computercodes zum Implementieren der Verfahrensschritte von wenigstens einem der Ansprüche 1-5 speichert.

## Revendications

1. Un procédé de détection d'applications malveillantes, le procédé comprenant :
la fourniture d'une bibliothèque de fonctions de gestionnaire (104; 104a; 104b) associée à un conteneur (301; 301a; 301b) sur une mémoire accessible par un processeur, les fonctions de gestionnaire commandant un accès par une ou plusieurs applications (101b) à des ressources protégées (202) sur un dispositif informatique,
le placement d'une pluralité d'applications (101b) dans le conteneur (301; 301a; 301b), le conteneur étant configuré de façon à isoler la pluralité d'applications (101b) d'un environnement d'exécution (201) du dispositif informatique,
l'association d'une même règle de sécurité à la pluralité d'applications (101b) dans le conteneur (301; 301a; 301b),
la modification, par l'intermédiaire du processeur, d'une pluralité d'appels de fonction des une ou plusieurs applications (101b) lors du chargement des une ou plusieurs applications (101b) à commander par les fonctions de gestionnaire, de façon à accéder à la bibliothèque de fonctions de gestionnaire (104; 104a; 104b) au lieu de fonctions d'interface de programme d'application (API) correspondantes du dispositif informatique par le remplacement d'une ou de plusieurs classes ou procédés des une ou plusieurs applications (101b) qui exécutent des appels de fonction vers les ressources protégées (202) avec un ou plusieurs appels de fonction vers des fonctions de gestionnaire correspondantes contenues dans la bibliothèque (104; 104a; 104b),
la réception, par les fonctions de gestionnaire, d'un appel de la pluralité d'appels de fonction à partir d'une application modifiée (101b),
l'accès à un serveur de sécurité distant (503) qui analyse l'appel de fonction reçu à la recherche de caractéristiques de comportement malveillantes au moyen d'une base de données distante (505) et qui indique au dispositif informatique si l'appel de fonction reçu contient des caractéristiques de comportement malveillantes,
l'exécution par les fonctions de gestionnaire de l'appel de fonction reçu vers les ressources protégées (202) si l'appel de fonction reçu ne contient pas de caractéristiques de comportement malveillantes, et
l'empêchement de l'application modifiée (101b) d'accéder aux ressources protégées (202) si l'appel de fonction reçu contient des caractéristiques de comportement malveillantes.

2. Le procédé selon la revendication 1, dans lequel l'empêchement de l'application modifiée d'accéder aux ressources protégées (202) comprend le blocage de l'appel de fonction reçu à partir de l'application modifiée, la terminaison d'une exécution de l'application modifiée ou l'envoi d'une notification d'alerte à un utilisateur.

3. Le procédé selon la revendication 1, dans lequel le remplacement d'une ou de plusieurs classes ou procédés des une ou plusieurs applications (101b) comprend le remplacement des une ou plusieurs classes ou procédés contenus dans un fichier d'application possédant une extension *.dex, l'application (101b) étant placée dans le conteneur (301; 301a; 301b) dans lequel le fichier possédant l'extension *.dex est modifié.

4. Le procédé selon la revendication 1, dans lequel les ressources protégées (202) comprennent un ou plusieurs éléments parmi ressources de réseau, système de fichiers, système d'exploitation et applications ou programmes (101a) autres que les une ou plusieurs applications (101b).

5. Le procédé selon la revendication 1, comprenant en outre :
suite à la modification, la détection qu'une action critique est tentée par au moins une des une ou plusieurs applications,
l'appel de procédés correspondant aux une ou plusieurs classes spécifiées dans la bibliothèque de fonctions de gestionnaire,
la vérification d'une conformité de l'action critique vis-à-vis d'une règle de sécurité, et
après détection d'aucune violation de la règle de sécurité, l'appel des une ou plusieurs classes ou procédés des une ou plusieurs applications qui exécutent des appels de fonction API vers les ressources protégées (202).

6. Un système de détection d'applications malveillantes, le système comprenant :
une mémoire comprenant un conteneur (301; 301a; 301b) associé à une bibliothèque de fonctions de gestionnaire (104; 104a; 104b), les fonctions de gestionnaire commandant un accès par une ou plusieurs applications (101b) à des ressources protégées (202) sur un dispositif informatique,
un processeur couplé à la mémoire et qui est configuré de façon à:
placer une pluralité d'applications (101b) dans le conteneur (301; 301a; 301b), le conteneur étant configuré de façon à isoler la pluralité d'applications (101b) d'un environnement d'exécution (201) du dispositif informatique,
associer une même règle de sécurité à la pluralité d'applications (101b) dans le conteneur (301; 301a; 301b),
modifier une pluralité d'appels de fonction des une ou plusieurs applications (101b) lors du chargement des une ou plusieurs applications (101b) à commander par les fonctions de gestionnaire de façon à accéder à la bibliothèque de fonctions de gestionnaire (104; 104a; 104b) au lieu de fonctions d'interface de programme d'application (API) correspondantes du dispositif informatique par le remplacement d'une ou de plusieurs classes ou procédés des une ou plusieurs applications (101b) qui exécutent des appels de fonction vers les ressources protégées (202) avec un ou plusieurs appels de fonction vers des fonctions de gestionnaire correspondantes contenues dans la bibliothèque (104; 104a; 104b),
recevoir, par les fonctions de gestionnaire, un appel de fonction de la pluralité des appels de fonction à partir d'une application modifiée (101b),
accéder à un serveur de sécurité distant (503) qui analyse l'appel de fonction reçu à la recherche de caractéristiques de comportement malveillantes au moyen d'une base de données distante (505) et qui indique au dispositif informatique si l'appel de fonction reçu contient des caractéristiques de comportement malveillantes,
exécuter par les fonctions de gestionnaire l'appel de fonction reçu vers les ressources protégées (202) si l'appel de fonction reçu ne contient pas de caractéristiques de comportement malveillantes, et
empêcher l'application modifiée (101b) d'accéder aux ressources protégées (202) si l'appel de fonction reçu contient des caractéristiques de comportement malveillantes.

7. Le système selon la revendication 6, dans lequel le processeur est configuré de façon à empêcher l'application modifiée (101b) d'accéder aux ressources protégées (202) au moins par le blocage de l'appel de fonction reçu de l'application modifiée (101b), par la terminaison d'une exécution de l'application modifiée ou par l'envoi d'une notification d'alerte à un utilisateur.

8. Le système selon la revendication 6, dans lequel, de façon à remplacer une ou plusieurs classes ou procédés des une ou plusieurs applications (101b), le processeur est configuré en outre de façon à remplacer les une ou plusieurs classes ou procédés contenus dans un fichier d'application possédant une extension *.dex, l'application (101b) étant placée dans le conteneur (301; 301a; 301b) dans lequel le fichier possédant l'extension *.dex est modifié.

9. Un support à espace mémoire lisible par ordinateur conservant en mémoire une pluralité de codes informatiques destinés à la mise en oeuvre des étapes de procédé d'au moins une des revendications 1 à 5.
